# EUROPEAN PATENT SPECIFICATION

(11) **EP 3 152 638 B1**
(45) Date of publication and mention of the grant of the patent: **29.07.2020**
(21) Application number: 15741324.6
(22) Date of filing: 05.06.2015
(51) Int. Cl.: G06F 3/01, G06F 3/0354

(54) **A HAPTIC INTERFACE SYSTEM FOR PROVIDING A HAPTIC STIMULUS INDICATIVE OF A VIRTUAL RELIEF**
HAPTISCHES SCHNITTSTELLENSYSTEM ZUR BEREITSTELLUNG EINES HAPTISCHEN REIZES ALS ANZEICHEN EINES VIRTUELLEN RELIEFS
SYSTÈME D'INTERFACE HAPTIQUE POUR FOURNIR UN STIMULUS HAPTIQUE INDIQUANT UN RELIEF VIRTUEL

(30) Priority: 06.06.2014 IT TO20140458
(43) Date of publication of application: 12.04.2017
(73) Proprietor: Fondazione Istituto Italiano di Tecnologia, 16163 Genova (IT)
(72) Inventor: BRAYDA, Luca, I-16014 Campomorone (IT); TORAZZA, Diego, I-16162 Genova (IT); ZINI, Giorgio, I-16159 Genova (IT); SANDINI, Giulio, I-16137 Genova (IT)
(74) Representative: Spalla, Pietro
(86) International application number: PCT/IB2015/054275
(87) International publication number: WO 2015/186111

(56) References cited:
- US-A- 6 057 828
- US-A1- 2002 021 277
- US-A1- 2004 041 787
- US-B1- 6 639 581
- US-B1- 7 602 376

## Description

### TECHNICAL FIELD

The present invention relates to a haptic interface system configured to provide a haptic stimulus indicative of a virtual relief.

### BACKGROUND ART

As is known, numerous devices are available nowadays that are capable of providing haptic stimuli, i.e. capable of inducing haptic sensations. In particular, device are known that are capable of providing haptic stimuli such as to communicate spatial information to the user.

In general, touch is a sense that has a crucial role in human perception mechanisms of the outside world, yet is characterized by the possibility of communicating local rather than global information regarding an object. For example, it is quite difficult to communicate graphical information through touch.

The document by Brayda L., Campus C., Chellali R., Rodriguez G. and Martinoli C., "An investigation of search behaviour in a tactile exploration task for sighted and non-sighted adults", CHI'11 Extended Abstracts on Human Factors in Computing Systems (pg. 2317-2322), ACM, May 2011 describes a 'mouse-shaped' device designed to stimulate the fleshy part of a single fingertip of a user, as a function of the local height of a virtual object. In particular, the device implements a fingertip manoeuvring system with one degree of freedom.

Even though the above-mentioned mouse-shaped device effectively enables providing haptic information related to the height of a point on a virtual object, it only provides one-dimensional information, thus limiting itself to providing point information, and therfore local information, related to the virtual object.

Patent US 6,639,581 describes a flexure mechanism for a computer interface device. The interface device comprises a manipulable element coupled to a closed-loop control mechanism, which enables the manipulable element to be rotated with two degrees of freedom.

Patent US 6,057,828 describes an apparatus for providing force sensations in virtual environments, which comprises a moveable joystick with numerous degrees of freedom due to the use of a gimbal mechanism.

Patent application US 2002/021277 describes a device for interfacing a user with a computer, which generates a graphical image and a graphical object. The device comprises a manipulable element and a sensor to detect the manipulation of the graphical object; in addition, the device comprises an actuator including a deformable member configured to provide a haptic sensation on the palm of the hand, this sensation being related to the interaction between the graphical image and the graphical object.

Patent application US 2004/041787 describes a hybrid pointing mechanism, including a pair of different pointing elements.

Patent US 7,602,376 describes a capacitive sensor for determining position and/or speed, which includes a moveable dielectric element that is coupled to an elongated member.

### DISCLOSURE OF INVENTION

The object of the present invention is to provide a haptic interface system that at least partially overcomes the drawbacks of the known art.

According to the invention, a haptic interface system is provided as defined in the appended claims.

### BRIEF DESCRIPTION OF THE DRAWINGS

For a better understanding of the invention, some embodiments will now be described, purely by way of non-limitative example and with reference to the accompanying drawings, in which:
- Figure 1 shows a perspective view of an interface device;
- Figure 2 shows a perspective view of a portion of the interface device shown in Figure 1, taken from a first angle;
- Figure 3 shows a cross-section view of a part of the interface device portion shown in Figure 2;
- Figure 4 shows a partially transparent side view of a part of the interface device portion shown in Figure 2;
- Figure 5 shows a perspective view of the interface device portion shown in Figure 2, taken from a second angle;
- Figure 6 schematically shows a perspective view of the present interface system;
- Figure 7 shows a flow chart of the operations performed by a processing unit included in the present interface device; and
- Figure 8 schematically shows a perspective view of a virtual surface, a plane tangential to the virtual surface and the interface device shown in Figure 1, when the latter is subjected to a rotation.

### BEST MODE FOR CARRYING OUT THE INVENTION

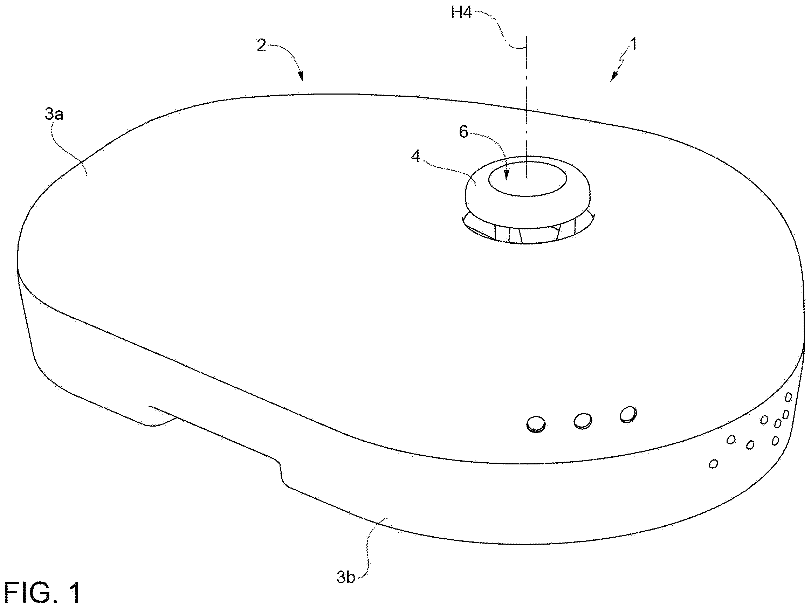

Figure 1 shows a device 1 that acts as a haptic interface, which shall be referred to hereinafter as the interface device 1.

The interface device 1 comprises a shell 2, which can be manipulated by a user, even with just one hand. The shell 2 is formed by a top half-shell 3a and a bottom half-shell 3b, made of metal or plastic for example and mechanically coupled together in a releasable manner; the bottom half-shell 3b may be provided with slide pads (not shown) designed to improve sliding with respect to a support surface.

The interface device 1 further comprises an actuator 4, which is operatively coupled to the shell 2, as described in detail hereinafter; the user can rest the tip of a finger (for example, the forefinger), and in particular the corresponding fleshy part of the fingertip, on the actuator 4. To this end, and without any loss of generality, the actuator 4 may have a concave-shaped hollow 6, designed to accommodate the fingertip. Furthermore, the actuator 4 is circularly symmetric about a respective axis of symmetry H4.

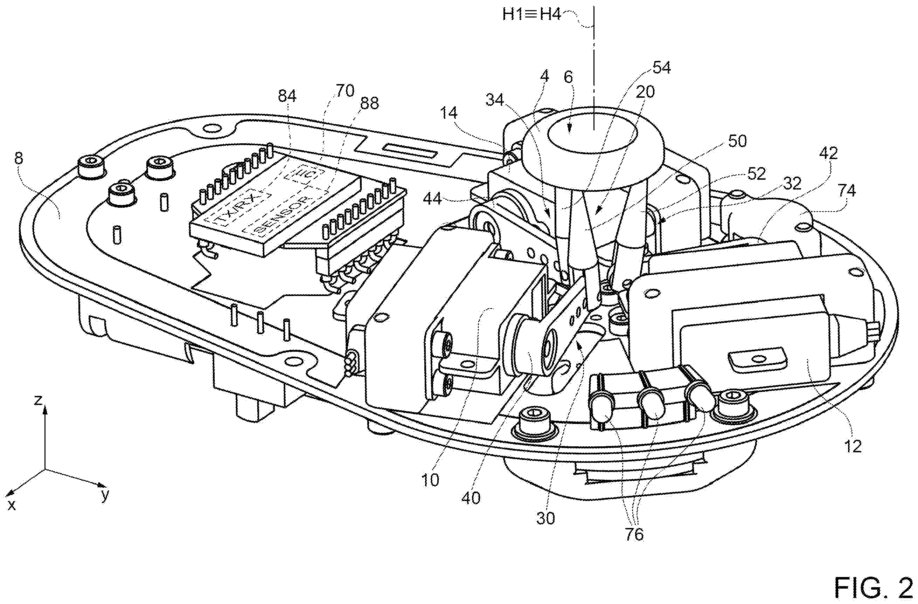

As shown in Figure 2, the interface device 1 comprises a printed circuit board (PCB) 8, which is provided with an integral orthogonal xyz reference system and extends parallel to the xy plane; furthermore, the printed circuit board 8 is integral with the shell 2. The xyz reference system shall be referred to hereinafter as the local xyz reference system.

A first, a second and a third electric motor 10, 12 and 14, of a type in itself known, are arranged on the printed circuit board 8. Without any loss of generality, in the embodiment shown in Figure 2 the first, second and third electric motors 10, 12 and 14 are rotary electric brush motors and are angularly separated from each other by 120°; furthermore, always without any loss of generality, the first, second and third electric motors 10, 12 and 14 are equidistant from an axis H1 perpendicular to the xy plane and passing through the actuator 4.

The interface device 1 comprises a manoeuvring system 20, which connects the first, second and third electric motors 10, 12 and 14 to the actuator 4 and is such that the actuator 4 can move, under the action of the electric motors, with only three degrees of freedom. In particular, the actuator 4 can move parallel to the z-axis and can rotate about axes parallel to the x-axis and the y-axis. Conversely, the actuator 4 cannot rotate about an axis parallel to the z-axis, nor move parallel to the x and y axes.

In greater detail, the manoeuvring system 20 comprises a first, a second and a third connection module 30, 32 and 34, which are identical to each other.

The first connection module 30 comprises a first crank 40 having a first and a second end. The first end of the first crank 40 is mechanically coupled to the output shaft (not shown) of the first electric motor 10, for example by means of an axial screw (not shown). The first crank 40 is thus drawn in rotation by the first electric motor 10.

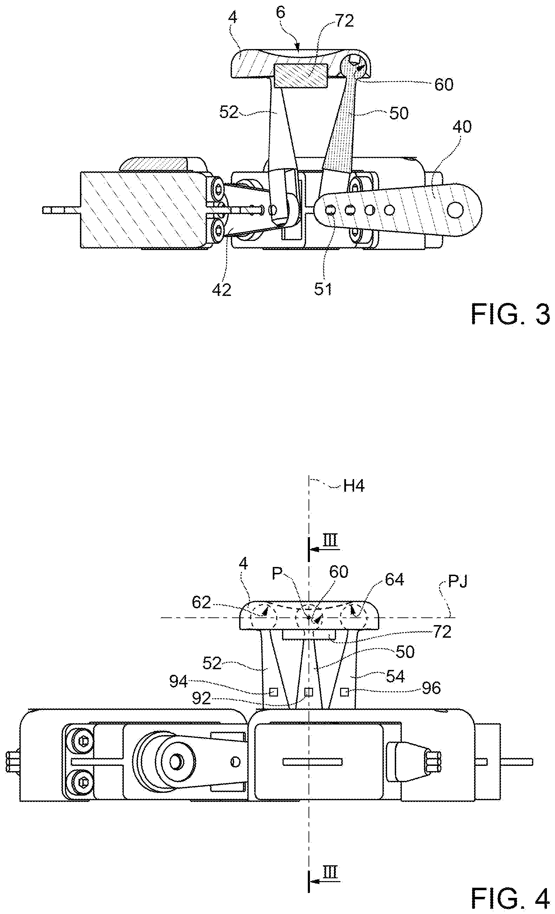

The first connection module 30 further comprises a first rod 50, which has a respective first end and a respective second end. The first end of the first rod 50 is mechanically coupled to the second end of the first crank 40, for example by means of a pivot 51 (shown in Figure 3), so as to be able to rotate with respect to the second end of the first crank 40. The second end of the first rod 50 is instead mechanically coupled to the actuator 4. In particular, as shown in Figure 3, the actuator 4 forms a first cavity 60 having the shape of a portion of a sphere; the second end of the first rod 50 also has the shape of a portion of a sphere and is press-fitted inside the first cavity 60.

In greater detail, the first rod 50 is hinged to the first crank 40, by means of a corresponding forked coupling, as the second end of the first crank 40 is inserted inside a corresponding forked portion of the first end of the first rod 50.

The second connection module 32 comprises a second crank 42, which has a first and a second end. The first end of the second crank 42 is mechanically coupled to the output shaft (not shown) of the second electric motor 12, for example by means of a corresponding axial screw (not shown). The second crank 42 is thus drawn in rotation by the second electric motor 12.

The second connection module 32 further comprises a second rod 52, which has a respective first end and a respective second end. The first end of the second rod 52 is mechanically coupled to the second end of the second crank 42, for example by means of a corresponding pivot (not shown), so as to be able to rotate with respect to the second end of the second crank 42. The second end of the second rod 52 is instead mechanically coupled to the actuator 4. In particular, as shown in Figure 4, the actuator 4 forms a second cavity 62 having the shape of a portion of a sphere; the second end of the second rod 52 also has the shape of a portion of a sphere and is press-fitted inside the second cavity 62.

In greater detail, the second rod 52 is hinged to the second crank 42, by means of a corresponding forked coupling, as the second end of the second crank 42 is inserted inside a corresponding forked portion of the first end of the second rod 52.

The third connection module 34 comprises a third crank 44, which has a first and a second end. The first end of the third crank 44 is mechanically coupled to the output shaft (not shown) of the third electric motor 14, for example by means of a corresponding axial screw (not shown). The third crank 44 is thus drawn in rotation by the third electric motor 14.

The third connection module 34 further comprises a third rod 54, which has a respective first end and a respective second end. The first end of the third rod 54 is mechanically coupled to the second end of the third crank 44, for example by means of a corresponding pivot (not shown), so as to be able to rotate with respect to the second end of the third crank 44. The second end of the third rod 54 is instead mechanically coupled to the actuator 4. In particular, as shown in Figure 4, the actuator 4 forms a third cavity 64 having the shape of a portion of a sphere; the second end of the third rod 54 also has the shape of a portion of a sphere and is press-fitted inside the third cavity 64.

In greater detail, the third rod 54 is hinged to the third crank 44, by means of a corresponding forked coupling, as the second end of the third crank 44 is inserted inside a corresponding forked portion of the first end of the third rod 54.

In still greater detail, the actuator 4 is mechanically coupled to the first, second and third rods 50, 52 and 54 by corresponding ball joints. In addition, the centres of the first, second and third cavities 60, 62 and 64, and therefore the centres of the corresponding ball joints, lie on a same plane PJ, shown in Figure 4; the axis of symmetry H4 of the actuator 4 is perpendicular to the PJ plane and intersects the PJ plane at a point P.

The interface device 1 also comprises a processing unit 70 (schematically shown in Figure 2), formed, for example, by a microcontroller unit of a type in itself known. The processing unit 70 is electrically connected to the first, second and third electric motors 10, 12 and 14, so as to control them, as described in greater detail hereinafter. For visual simplicity, the electrical connections concerning the processing unit 70 are not shown.

The interface device 1 also comprises a first and a second vibrating motor 72 and 74, of an electric type.

The first vibrating motor 72, shown in Figure 3, is electrically connected to the processing unit 70, from which it is controlled, and is constrained to the actuator 4, in a manner which is in itself known, so as to cause vibration of the actuator 4 with respect to the shell 2. The first vibrating motor 72 may be formed, for example, by an eccentrically-loaded motor of known type.

The second vibrating motor 74 is fastened on the printed circuit board 8 and is electrically connected to the processing unit 70, from which it is controlled. The second vibrating motor 74 is designed to cause vibration of the interface device 1 with respect to the outside world, for example with respect to a support surface on which the interface device 1 is placed.

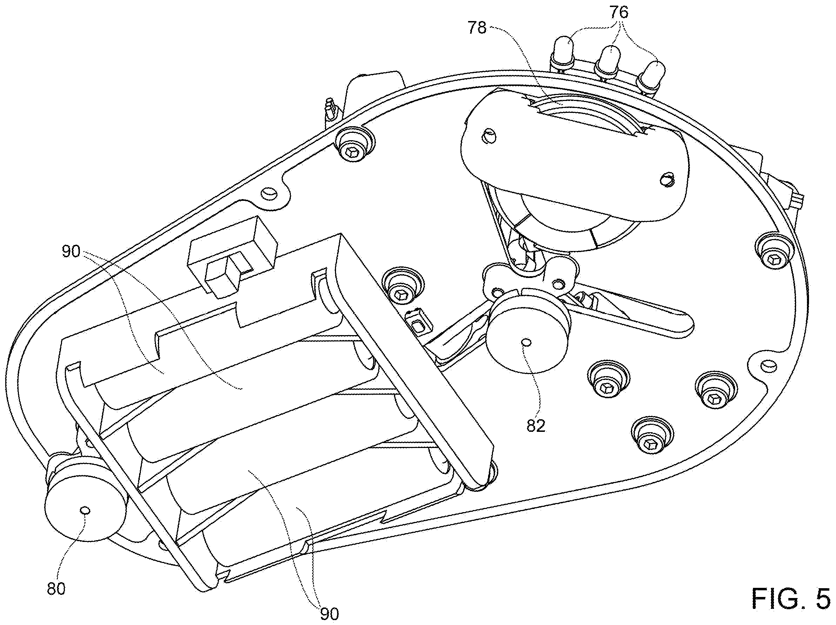

The interface device 1 also comprises one or more LEDs 76, electrically connected to the processing unit 70, so as to provide the user with visual indications. In addition, as shown in Figure 5, the interface device 1 comprises a loudspeaker 78, electrically connected to the processing unit 70 and controlled by the latter so as to provide the user with a sound signal.

The interface device 1 also comprises a first and a second magnetic unit 80 and 82, fastened to the printed circuit board 8 and electrically connected to the processing unit 70. Each of the first and second magnetic units 80 and 82 is of a type in itself known and comprises a respective core of ferrimagnetic material (not shown), formed of ferrite for example, and a respective conductive winding (not shown), wound around the core; both the core and the conductive winding extend along a same axis, parallel to the z-axis, which shall be referred to hereinafter as the axis of the magnetic unit. The barycentre of each core lies on the axis of the corresponding magnetic unit.

The processing unit 70 controls the first and second magnetic units 80 and 82 so as to generate a first and a second magnetic field, directed parallel to the z-axis (at least locally). In addition, without any loss of generality, it is hereinafter assumed the first and second magnetic units 80 and 82 are arranged such that the respective barycentres, i.e. the barycentres of the respective cores, are aligned along a direction parallel to the y-axis.

The interface device 1 also comprises a wireless two-way communications module 84 electrically connected to the processing unit 70. For example, the communications module 84, of a type in itself known, may be formed by a Bluetooth transceiver module.

The interface device 1 also comprises a local sensing module 88, which is fastened to the printed circuit board 8 and includes, for example, a first, a second and a third accelerometer (not shown), respectively oriented so as to detect acceleration directed parallel to the x-axis, the y-axis and the z-axis. The local sensing module 88 is electrically connected to the processing unit 70 and provides the latter with a detection signal indicative of any acceleration to which the interface device 1 is subjected. In this way, the processing unit 70 can, for example, switch between a first and a second operating mode, based on the electrical detection signal. In particular, if no acceleration is detected for a period exceeding a predetermined time interval, the processing unit 70 enters the second operating mode, in which one or more of the functions implemented by the processing unit 70 are set to standby; otherwise, the processing unit 70 operates in the first operating mode, to which this description will make reference, except where specified otherwise. Furthermore, it is possible that the communications module 84 is set to standby in the second operating mode. The current operating mode may be indicated by the processing unit 70, for example by consequently controlling the LEDs 76, which may also be used to indicate, for example, the transmission/reception of signals by the communications module 84.

The interface device 1 further comprises one or more batteries 90 (shown in Figure 5), fastened to the printed circuit board 8 and electrically connected to the processing unit 70; for visual simplicity, the electrical connections concerning the batteries 90 are not shown. Furthermore, the batteries 90 are electrically connected to the first, second and third electric motors 10, 12 and 14, as well as to the first and second vibrating motors 72 and 74, the communications module 84, the local sensing module 88, the loudspeaker 78 and the first and second magnetic units 80 and 82.

Still with reference to the batteries 90, the processing unit 70 may be configured to control the LEDs 76 so as to indicate the charge state of the batteries 90.

The interface device 1 also comprises a first, a second and a third force sensor 92, 94 and 96 (only shown in Figure 4, for visual simplicity) mechanically coupled, respectively, to the first, second and third rods 50, 52 and 54. In particular, the first, second and third force sensors 92, 94 and 96 are of a type in itself known; for example, they may be formed by corresponding strain gauges. Furthermore, assuming that the user exerts mechanical pressure (and therefore a force) on the actuator 4, the first, second and third force sensors 92, 94 and 96 are designed to respectively generate a first, a second and a third electrical force signal, indicative of the components of the above-mentioned force respectively directed along the directions in which the first, second and third rods 50, 52 and 54 extend.

The processing unit 70 is electrically connected to the first, second and third force sensors 92, 94 and 96, so as to receive the first, second and third force signals. In addition, the processing unit 70 is configured to determine the direction along which the user exerts the above-mentioned force on the actuator 4, based on the first, second and third force signals and the directions along which the first, second and third rods 50, 52 and 54 extend, the latter being known by the processing unit 70 moment by moment, for example, based on the angular positions of the shafts of the first second and third electric motors 10, 12 and 14. In this way, the interface device 1 may function as an input peripheral, in particular as a force-feedback peripheral.

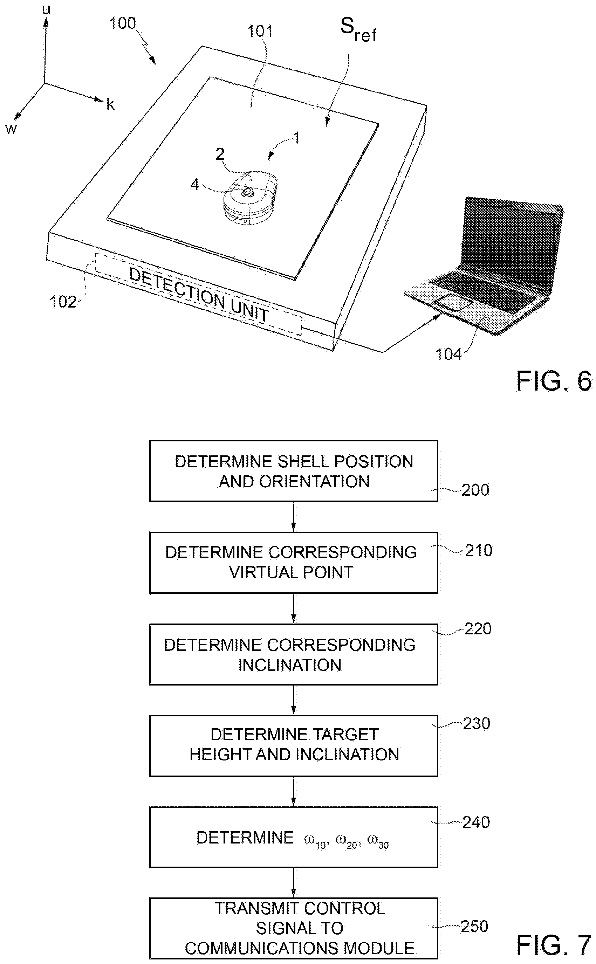

That having been said, in use and as shown in Figure 6, the interface device 1 is placed on top of a support unit 100. The support unit 100 is formed, for example, by a graphics tablet of a type in itself known, therefore including a rest top 101, which in turn has a flat surface, on top of which the interface device 1 can be moved by the user, and which shall be referred to hereinafter as the reference surface S_{ref}. In particular, the interface device 1 can be moved by dragging it over the reference surface S_{ref}.

In Figure 6, a reference system wku is also shown, which is integral with the support unit 100 and which shall be referred to hereinafter as the absolute wku reference system. Without any loss of generality, the absolute wku reference system is arranged such that the reference surface S_{ref} extends parallel to the wk plane.

The support unit 100 also comprises a detection unit 102, which is designed to determine, in a manner which is in itself known, the positions of the first and second magnetic units 80 and 82 on the reference surface S_{ref}, based on the above-mentioned first and second magnetic fields, which intersect the reference surface S_{ref} along directions parallel to the u-axis. In particular, the detection unit 102 determines the points where the axes of the first and second magnetic units 80 and 82 intersect the reference surface S_{ref}.

The detection unit 102 is consequently capable of generating an electrical position signal, indicative of the position of the first and second magnetic units 80 and 82, and, more precisely and without any loss of generality, of the orthogonal projections parallel to the u-axis of the corresponding barycentres on the reference surface S_{ref}. Furthermore, the detection unit 102 is electrically connected to a computer 104, such that the latter can receive the electrical position signal.

In turn, and based on the electrical position signal, the computer 104 calculates the position and orientation of the interface device 1, and more precisely the position and orientation of the shell 2, with respect to the absolute wku reference system; thus, the computer 104 determines the position of the shell 2 on the reference surface S_{ref}, as well as the orientation of the local xyz reference system with respect to the absolute wku reference system.

In greater detail, given a predetermined point of the interface device 1 (for example, the above-mentioned point P), the computer 104 calculates, moment by moment, the point of the reference surface S_{ref} vertically (i.e. parallel to the u-axis) aligned with the predetermined point; the coordinates of this point of the reference surface S_{ref} shall be referred to hereinafter as the position of the shell 2, measured in the absolute wku reference system. It is also assumed that the position of the interface device 1 coincides with the position of the shell 2 and so does not depend on any rototranslation of the actuator 4.

With regard to the orientation of the shell 2, the computer 104 calculates, for example and without any loss of generality, the orientation of the segment that joins the barycentres of the cores of the first and second magnetic units 80 and 82 with respect to the absolute wku reference system. In this regard, the interface device 1 is such that when it is placed on the reference surface S_{ref}, the above-mentioned segment is parallel to the latter. The orientation of the shell 2 can therefore be expressed as a single angle θ, which expresses, for example, the rotation of the above-mentioned segment with respect to a freely chosen, predetermined angular position. Furthermore, it is assumed that the orientation of the interface device 1 coincides with the orientation of the shell 2.

The computer 104 also stores, in a manner which is in itself known, a virtual map, i.e. a virtual three-dimensional surface, regarding a virtual object. For example, the virtual map may be formed by a set of virtual coordinate pairs, each pair of virtual coordinates identifying a point of a virtual plane and also being associated with a corresponding virtual height value, which indicates the height of a corresponding point of the virtual three-dimensional surface. In practice, each point of the virtual three-dimensional surface is identified by a set of three coordinates related to a virtual ijh reference system (not shown).

For each virtual point of the virtual three-dimensional surface, the computer 104 also stores information indicative of the orientation with respect to the virtual ijh reference system of a corresponding (virtual) tangent plane, which is tangential to the virtual three-dimensional surface at the virtual point considered; this last information shall be referred to hereinafter as the inclination of the virtual three-dimensional surface at the virtual point considered. The inclination of the virtual three-dimensional surface is expressed, for example and in a manner which is in itself known, as a pair of angles (α,β), referring for example to a spherical system integral with the virtual ijh reference system.

In a manner in itself known, the computer 104 associates the three coordinates in the virtual ijk reference system of each point of the virtual three-dimensional surface with the pair of coordinates (relative to the wk plane) of a corresponding point of the reference surface S_{ref}. In particular, for each point of the reference surface S_{ref}, the computer 104 stores the coordinates of the corresponding virtual point.

In greater detail, as shown in Figure 7 and previously mentioned, at each time instant t₀, the computer 104 determines (block 200) the position of the shell 2 on the reference surface S_{ref}, identified by pair (w₀,k₀), as well as the orientation θ₀ of the shell 2. In addition, the computer 104 determines (block 210), i.e. selects, the point of the virtual three-dimensional surface that corresponds to the position of the shell 2; in this regard, it is assumed, for example, that this corresponding virtual point has coordinates (i₀,j₀,h₀).

In addition, the computer 104 determines (block 220) the inclination of the virtual three-dimensional surface at the virtual point (i₀,j₀,h₀); hereinafter it is assumed that this inclination is equal to (α₀,β₀). In addition, it is assumed, without any loss of generality, that the absolute wku reference system coincides with the virtual ijh reference system, which, in turn, can be considered integral with the reference surface S_{ref}; in particular, the ij plane is coplanar with the reference surface S_{ref}.

The computer 104 then determines (block 230) a target height, hereinafter indicated by u₀, as a function of coordinate h₀ of the virtual point (i₀,j₀,h₀), as well as of the shape and arrangement of the actuator 4 with respect to the shell 2. In addition, the computer 104 determines a target inclination, hereinafter identified by a pair of angles (γ₀,δ₀), as a function of the inclination (α₀,β₀) of the virtual three-dimensional surface at the virtual point (i₀,j₀,h₀) and the orientation θ₀. Purely by way of example, hereinafter it is assumed that the target height u₀ is directly proportional to height h₀ and that the target inclination (γ₀,δ₀) is, for example, equal to (α₀,β₀). In general, both the target height u₀ and the target inclination (γ₀,δ₀) refer to the absolute wku reference system, and in particular, in the case of target inclination, to a spherical reference system integral with the absolute wku reference system and coincident with the spherical reference system with respect to which the angles α₀ and β₀ refer.

The computer 104 also determines (block 240) a first, a second and a third target angle ω₁₀, ω₂₀ and ω₃₀, as a function of the target height u₀ and the target inclination (γ₀,δ₀). The first, second and third target angles ω₁₀, ω₂₀ and ω₃₀ are the angles of rotation that the output shafts of the first, second and third electric motors 10, 12 and 14 must respectively take so that the actuator 4 assumes target height u₀ and target inclination (γ₀,δ₀), with respect to the absolute wku reference system. Without any loss of generality, in this description it is assumed that the height of the actuator 4 is equal to the coordinate along the u-axis of the above-mentioned point P; it is likewise assumed that the inclination of the actuator 4 is the inclination of the above-mentioned PJ plane.

After this, the computer 104 transmits (block 250) an electromagnetic signal to the communications module 84, which shall be referred to hereinafter as the control signal, which is indicative of the first, second and third target angles ω₁₀, ω₂₀ and ω₃₀.

Once the control signal is received, the communications module 84 transmits the control signal to the processing unit 70, which controls the first, second and third electric motors 10, 12 and 14 so that the respective output shafts rotate until they respectively reach the first, second and third target angles ω₁₀, ω₂₀ and ω₃₀. In this way, the actuator 4 is arranged at target height u₀ and with target inclination (γ₀,δ₀).

In practice, the actuator 4 is arranged such that, independently of orientation θ₀, it has the same inclination as the plane that is tangential to the virtual three-dimensional surface at the point of the latter that corresponds to the position of the shell 2.

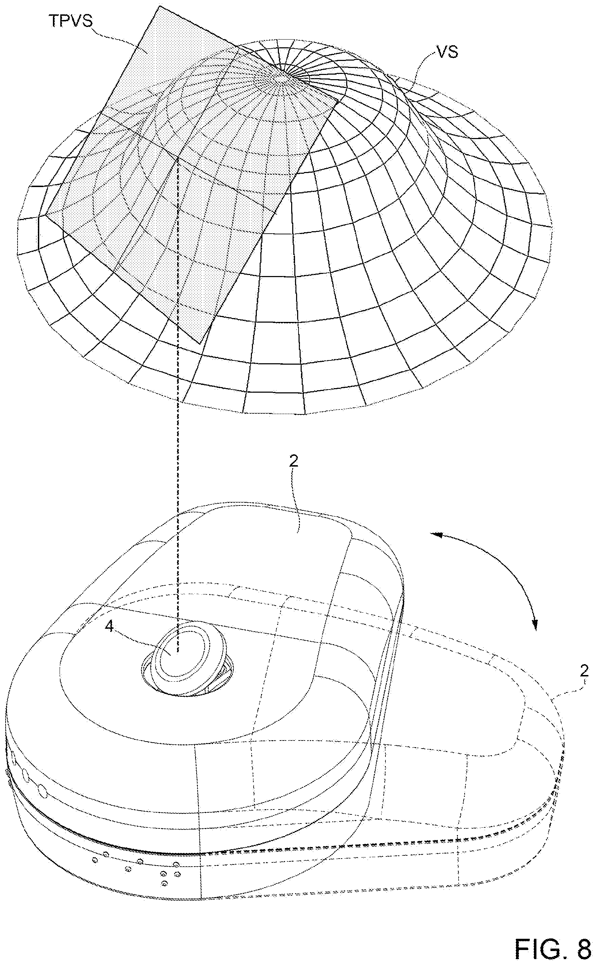

In greater detail, as shown in Figure 8, the movement of the actuator 4 is controlled by the processing unit 70 such that the height and inclination of the actuator 4 with respect to the absolute wku reference system are invariant with respect to the orientation of the shell 2 with respect to the reference surface S_{ref}, and therefore with respect to the orientation of the shell 2 with respect to the absolute wku reference system. This enables the user to receive a haptic stimulus on his/her fingertip while moving the shell 2, this haptic stimulus being such as to enable the user to correctly perceive the profile of the virtual three-dimensional surface. In fact, this perceptive mechanism simulates what happens in real life when a user rests a fingertip on an inclined physical surface: even if the user turns his/her hand, the inclination of the physical surface does not change.

Purely by way of example, Figure 8 shows an example of a virtual three-dimensional surface, indicated by VS, as well as a plane tangential to the virtual three-dimensional surface VS at the point of the latter that corresponds to the position of the shell 2, indicated by TPVS; Figure 8 also shows how the inclination of the actuator 4 remains the same as the inclination of the tangent plane TPVS, independently of the rotation to which the shell 2 is subjected (the rotation is shown with broken lines).

The processing unit 70 may activate the first vibrating motor 72, for example if the point of the virtual three-dimensional surface determined during the operations in block 210 belongs to a first predetermined portion of the virtual three-dimensional surface, formed, for example, by an edge portion. Similarly, the processing unit 70 may activate the second vibrating motor 74, for example if the point of the virtual three-dimensional surface determined during the operations in block 210 belongs to a second predetermined portion of the virtual three-dimensional surface. In addition, the processing unit 70 may control the loudspeaker 78, for example if the point of the virtual three-dimensional surface determined during the operations in block 210 belongs to a third predetermined portion of the virtual three-dimensional surface. Whether the above-mentioned point belongs to the first or the second or the third predetermined portion of the virtual three-dimensional surface can be checked in a manner which is in itself known by the computer 104, which then communicates the outcome of the check to the processing unit 70 via the communications module 84.

The advantages that can be achieved with the present interface device clearly emerge from the foregoing description. In particular, the present interface device, together with the computer 104 and the support unit 100, forms a haptic interface system that enables providing tactile information regarding the local height and local inclination of a virtual object, and thus enables the perception of a three-dimensional virtual relief. Therefore, the present haptic interface system enables the user to have a somesthetic interaction with the virtual object, i.e. an interaction that enables the user to combine tactile and proprioceptive stimuli, in such a way that the user can reconstruct the contour of the virtual object by moving his/her hand.

The present haptic interface system can thus be employed, for example, as an aid for blind people, or can be integrated in a traditional learning tool. It is also possible to integrate the present interface device in a 'mouse' of known type; in this way, the information transmitted by the haptic interface system is integrated with information commonly provided by known types of mouse, i.e. the proprioceptive information and the visual information related to the position of the cursor on the screen, enriching the feedback provided to the user.

From another point of view, the present haptic interface system enables the user to implement a somesthetic discovery strategy on a virtual object similar to what happens in the case of a real object. In fact, thanks to the three degrees of freedom in movement of the actuator, the user can follow the contour of the virtual object with his/her fingertip in order to discover the details of the virtual object.

In particular, even when no movement is imparted by the user, the present haptic interface system enables sensing a characteristic of the virtual object (in the case in point, a local portion of the virtual surface) that is beyond just point information, because his/her fingertip touches the actuator 4.

Finally, it is clear that modifications and variants can be made to the present haptic interface system without departing from the scope of the present invention, as defined in the appended claims.

For example, the interface device could comprise more than one actuator, so as to provide haptic information to more than one fingertip.

The electric motors may be of different types with respect to that described and/or may have different spatial layouts, such as a non-symmetrical layout for example. For example, the electric motors may be of a linear type; furthermore, embodiments are possible where, for example, each comprises a pair of rotary electric motors and a linear electric motor, or a pair of linear electric motors and a rotary electric motor.

It is also possible that the number of electric motors is other than three. Furthermore, it is possible that the electric motors are not all the same, as can also be the case of the connection modules that form the manoeuvring system of the actuator.

In a manner in itself known, each electric motor may comprise a respective reducer, which in turn may comprise one or more gears and may, for example, be of the multistage or epicyclic train type, or even of a type with pulleys. Furthermore, each electric motor may comprise respective electronic control circuitry, which may implement, for example, a position or torque control technique.

Embodiments are also possible that comprise pneumatic or hydraulic motors instead of electric motors, which in turn may or may not comprise respective reducers and respective electronic control circuitry. Also in this case, the motors may be, for example, of the rotary or linear type.

With regard to the manoeuvring system of the actuator, this may generally be different from that described herein; furthermore, the manoeuvring system depends on the type and arrangement of the motors. For example, in the case of linear electric motors, these may form the same manoeuvring system of the actuator 4; in fact, in this case, each linear motor can be secured, at a first end, to the printed circuit board 8 and, at a second end (formed, for example, by a rod of the linear motor), to the actuator 4 by means of a ball joint. In this case, each linear electric motor also performs the functions carried out by the corresponding crank-rod pair in the embodiment shown in Figure 2.

Embodiments are also possible in which the guide and manoeuvring functions of the actuator 4 are separate from each other. For example, embodiments comprising a ball joint and a prismatic guide are possible. In this case, the ball joint prevents translation of the actuator along the x and y axes, but allows rotation of the actuator about these two axes; furthermore, the prismatic guide prevents rotation of the actuator about the z-axis, but allows translation of the actuator along the z-axis. In these embodiments, the actuator is manoeuvred by rods having a ball joint at both ends; in particular, one end of each rod is connected to the actuator. Furthermore, in the case of rotary motors, the second end of each rod is connected to the output shaft of the corresponding motor by means of a rocker arm. Instead, in the case of linear motors, each motor is connected to the printed circuit board by a corresponding ball joint, while the movable output rod of the motor is connected to the actuator by a ball joint.

It is also possible that the position and orientation of the shell 2 refer to different points and planes with respect to that described and/or are determined in a different manner with respect to that described. For example, the position and the orientation of the shell 2 may be determined by an optical detection system, of a type in itself known; in this case, the first and second magnetic units 80 and 82 might not be present. It is also possible that the position and orientation of the shell 2 are determined by using the detection module 88, or, in general, by means of an accelerometer and/or a gyroscope, which may be fastened on the printed circuit board 8.

It is also possible that the virtual ijh reference system does not coincide with the absolute wku reference system, but is, for example, translated or rototranslated with respect to the latter.

Regarding the first, second and third force sensors 92, 94 and 96, embodiments are possible that include a different number of force sensors and/or force sensors of a different type. Again, the force sensors may be arranged differently, for example in contact with the cranks, instead of with the rods.

It is also possible that the interface device 1 totally or partially performs the functions carried out by the computer 104 and/or the detection unit 102. For example, the interface device 1 may have a memory in which the virtual map is stored. Furthermore, it is possible that the interface device 1 determines the position and orientation of its shell 2 through cooperation with the support unit 100, or through cooperation with a different localization system of known type, or even autonomously, and in any case without requiring the aid of the computer 104.

In particular, in the case where the interface device 1 autonomously determines the position and orientation of the shell 2, it is possible for example that the processing unit 70 cooperates with the local sensing module 88 to determine said position and orientation. In detail, it is possible for example that, in use, the interface device 1 is initially placed on a predetermined point of the reference surface S_{ref} and with a predetermined orientation, and is subsequently moved on the reference surface S_{ref}, in a way such that, moment by moment, the processing unit 70 is capable of determining the position and orientation of the shell 2 based on the (linear and/or angular) acceleration and/or the (optical, magnetic or otherwise) orientation detected by the local sensing module 88. In this regard, it is possible, for example, that instead of three accelerometers, the sensing module 88 includes an accelerometer, a gyroscope and a magnetometer, or, always by way of example, three accelerometers, three gyroscopes and a magnetometer.

Finally, for each virtual point of the virtual three-dimensional surface, the computer 104 or the interface device 1 may calculate the corresponding inclination each time, instead of storing it.

## Claims

1. A haptic interface system comprising:
- a shell (2) which may be manipulated by a user;
- an actuator (4) mechanically coupled to the shell (2) and apt to provide a haptic stimulus on a fingertip of the user;
- a motor assembly (10,12,14,20) configured to move the actuator (4) with three degrees of freedom;
**characterized in that** the shell (2) is configured to be moved on a reference surface (S_{ref}) by the user, said haptic interface system further comprising:
- a memory unit (104) configured to store a virtual three-dimensional surface;
- a localization system (80,82,102,104) configured to determine the position and orientation of the shell (2) with respect to the reference surface (S_{ref}); and
- a control stage (70,104) ; and
wherein the control stage (70,104) includes:
- a selection unit (104) configured to select a point of the virtual three-dimensional surface, as a function of the position of the shell (2) on the reference surface (S_{ref}), the selected virtual point having a respective height, and the virtual three-dimensional surface having a respective inclination at the selected virtual point; and
- an actuation unit (70,104) configured to control the motor assembly (10,12,14,20) so as to:
- arrange the actuator (4) at a height, with respect to the reference surface (S_{ref}), which is a function of the height of the selected virtual point; and
- tilt the actuator (4) with respect to the reference surface (S_{ref}), as a function of said respective inclination of the virtual three-dimensional surface;
and wherein the control stage (70,104) is further configured to control the motor assembly (10,12,14,20) so as to move the actuator (4) in an invariant manner with respect to the orientation of the shell (2) .

2. The system according to claim 1, wherein the shell (2) is integral with a reference system XYZ comprising a first, a second and a third axis (x, y, z), and wherein the motor assembly (10,12,14,20) is such that the actuator (4) is configured to move the to rotate about axes respectively parallel to the first or the second axis (x, y) and to move parallel to the third axis (z).

3. The system according to any of the preceding claims, further comprising a first and a second magnetic unit (80,82) integral with the shell (2) and configured to respectively generate a first and a second magnetic field, said localization system (80,82,102,104) comprising:
- a graphics tablet (100), which forms said reference surface (S_{ref}) and is configured to generate a preliminary signal indicative of the positions of the first and second magnetic units (80,82); and
- a computer (104) configured to determine the position and orientation of the shell (2), as a function of the preliminary signal.

4. The system according to any of the preceding claims, further comprising a first vibrating motor (72) configured to cause a vibration, of the actuator (4) with respect to the shell (2).

5. The system according to any of the preceding claims, further comprising a second vibrating motor (74) configured to cause a vibration of the shell (2) with respect to a support plane, when the shell (2) is arranged on said support plane.

6. The system according to any of the preceding claims, further comprising at least a first sensor (92) configured to generate a first force signal, indicative of a force exerted by the user on the actuator (4).

7. The system according to claim 6, further comprising:
- a second and a third sensor (94,96) configured to respectively generate a second and a third force signal, the first, the second and the third force signals being indicative of the corresponding components directed along different directions of said force exerted by the user.

8. The system according to claim 7, further comprising a processing unit (70) configured to determine the direction along which the user exerts said force on the actuator (4), on the basis of the first, the second and the third force signals.

9. The system according to any preceding claims, wherein the motor assembly comprises a first, a second and a third motor (10,12,14) and a connection stage (20), and wherein the connection stage (20) comprises:
- a first crank (40) configured to be driven in rotation by the first, motor (10) ;
- a first rod (50) having a first and a second end, the first end of the first rod (50) being hinged to the first crank (40), the second end of the first rod (50) having the shape of a portion of a sphere and forming a first ball joint with the actuator (4) ;
- a second crank (42) configured to be driven in rotation by the second motor (12) ;
- a second rod (52) having a first and a second end, the first end of the second rod (52) being hinged to the second crank (42), the second end of the second rod (52) having the shape of a portion of a sphere and forming a second ball joint with the actuator (4);
- a third crank (44) configured to be driven in rotation by the third motor (14) ;
- a third rod (54) having a first and a second end, the first end of the third rod (54) being hinged to the third crank (44), the second end of the third rod (54) having the shape of a portion of a sphere and forming a third ball joint with the actuator (4).

10. The system according to claim 7 or 8, wherein the first, the second and the third sensor (92, 94, 96) are respectively formed by a first, a second and a third strain gauge, wherein the motor assembly comprises a first, a second and a third motor (10,12,14) and a connection stage (20), and wherein the connection stage (20) comprises:
- a first crank (40) configured to be driven in rotation by the first motor (10) ;
- a first rod (50) having a first and a second end, the first end of the first rod (50) being hinged to the first crank (40), the second end of the first rod (50) having the shape of a portion of a sphere and forming a first ball joint with the actuator (4);
- a second crank (42) configured to be driven in rotation by the second motor (12);
- a second rod (52) having a first and a second end, the first end of the second rod (52) being hinged to the second crank (42), the second end of the second rod (52) having the shape of a portion of a sphere and forming a second ball joint with the actuator (4);
- a third crank (44) configured to be driven in rotation by the third motor (14);
- a third rod (54) having a first and a second end, the first end of the third rod (54) being hinged to the third crank (44), the second end of the third rod (54) having the shape of a portion of a sphere and forming a third ball joint with the actuator (4) ;
and wherein said first, second and third strain gauges are mechanically coupled to the first, the second and the third rod (50,52,54), respectively.

## Patentansprüche

1. Haptisches Schnittstellensystem, das Folgendes umfasst:
- eine Hülle (2), die durch einen Anwender bedient werden kann;
- ein Betätigungselement (4), das an die Hülle (2) mechanisch gekoppelt ist und geeignet ist, einen haptischen Reiz an eine Fingerspitze des Anwenders zu liefern;
- eine Motoranordnung (10, 12, 14, 20), die konfiguriert ist, das Betätigungselement (4) mit drei Freiheitsgraden zu bewegen;
**dadurch gekennzeichnet, dass**
die Hülle (2) konfiguriert ist, auf einer Referenzfläche (Sref) durch den Anwender bewegt zu werden, wobei das haptische Schnittstellensystem ferner Folgendes umfasst:
- eine Speichereinheit (104), die konfiguriert ist, eine virtuelle dreidimensionale Fläche zu speichern;
- ein Lokalisierungssystem (80, 82, 102, 104), das konfiguriert ist, die Position und Ausrichtung der Hülle (2) in Bezug auf die Referenzfläche (Sref) zu bestimmen; und
- eine Steuerstufe (70, 104);
die Steuerstufe (70, 104) Folgendes umfasst:
- eine Auswahleinheit (104), die konfiguriert ist, einen Punkt der virtuellen dreidimensionalen Fläche als eine Funktion der Position der Hülle (2) auf der Referenzfläche (Sref) auszuwählen, wobei der ausgewählte virtuelle Punkt eine jeweilige Höhe besitzt und die virtuelle dreidimensionale Fläche eine jeweilige Neigung an dem ausgewählten virtuellen Punkt besitzt; und
- eine Betätigungseinheit (70, 104), die konfiguriert ist, die Motoranordnung (10, 12, 14, 20) zu steuern, um:
- das Betätigungselement (4) in einer Höhe in Bezug auf die Referenzfläche (Sref) anzuordnen, die eine Funktion der Höhe des ausgewählten virtuellen Punkts ist; und
- das Betätigungselement (4) als eine Funktion der jeweiligen Neigung der virtuellen dreidimensionalen Fläche in Bezug auf die Referenzfläche (Sref) zu neigen; und
die Steuerstufe (70, 104) ferner konfiguriert ist, die Motoranordnung (10, 12, 14, 20) zu steuern, um das Betätigungselement (4) auf gleichbleibende Weise in Bezug auf die Ausrichtung der Hülle (2) zu bewegen.

2. System nach Anspruch 1, wobei die Hülle (2) mit einem Referenzsystem XYZ, das eine erste, eine zweite und eine dritte Achse (x, y, z) aufweist, einteilig ausgebildet ist und wobei die Motoranordnung (10, 12, 14, 20) derart ist, dass das Betätigungselement (4) konfiguriert ist, sich um Achsen jeweils parallel zu der ersten oder der zweiten Achse (x, y) zu drehen und sich parallel zu der dritten Achse (z) zu bewegen.

3. System nach einem der vorhergehenden Ansprüche, das ferner eine erste und eine zweite magnetische Einheit (80, 82) einteilig mit der Hülle (2) umfasst und konfiguriert ist, jeweils ein erstes und ein zweites magnetisches Feld zu erzeugen, wobei das Lokalisierungssystem (80, 82, 102, 104) umfasst:
- eine Grafiktafel (100), die die Referenzfläche (Sref) bildet und konfiguriert ist, ein vorläufiges Signal zu erzeugen, das die Positionen der ersten und der zweiten magnetischen Einheit (80, 82) angibt; und
- einen Computer (104), der konfiguriert ist, die Position und Ausrichtung der Hülle (2) als eine Funktion des vorläufigen Signals zu bestimmen.

4. System nach einem der vorhergehenden Ansprüche, das ferner einen ersten Schwingungsmotor (72) umfasst, der konfiguriert ist, eine Schwingung des Betätigungselements (4) in Bezug auf die Hülle zu bewirken.

5. System nach einem der vorhergehenden Ansprüche, das ferner einen zweiten Schwingungsmotor (74) umfasst, der konfiguriert ist, eine Schwingung der Hülle (2) in Bezug auf eine Tragebene zu bewirken, wenn die Hülle (2) auf der Tragebene angeordnet ist.

6. System nach einem der vorhergehenden Ansprüche, das ferner mindestens einen ersten Sensor (92) umfasst, der konfiguriert ist, ein erstes Kraftsignal zu erzeugen, das eine Kraft angibt, die durch den Anwender auf das Betätigungselement (4) ausgeübt wird.

7. System nach Anspruch 6, das ferner Folgendes umfasst:
- einen zweiten und einen dritten Sensor 94, 96), die konfiguriert sind, ein zweites bzw. ein drittes Kraftsignal zu erzeugen, wobei das erste, das zweite und das dritte Kraftsignal die entsprechenden Komponenten angeben, die entlang verschiedener Richtungen der durch den Anwender ausgeübten Kraft gelenkt werden.

8. System nach Anspruch 7, das ferner eine Verarbeitungseinheit (70) umfasst, die konfiguriert ist, die Richtung, entlang der der Anwender die Kraft auf das Betätigungselement (4) ausübt, anhand des ersten, des zweiten und des dritten Kraftsignals zu bestimmen.

9. System nach einem vorhergehenden Anspruch, wobei die Motoranordnung einen ersten, einen zweiten und einen dritten Motor (10, 12, 14) und eine Verbindungsstufe (20) umfasst und wobei die Verbindungsstufe (20) umfasst:
- eine erste Kurbel (40), die konfiguriert ist, durch den ersten Motor (10) rotatorisch angetrieben zu werden;
- eine erste Stange (50) mit einem ersten und einem zweiten Ende, wobei das erste Ende der ersten Stange (50) an der ersten Kurbel (40) angelenkt ist, wobei das zweite Ende der ersten Stange (50) die Form eines Teils einer Kugel besitzt und mit dem Betätigungselement (4) ein erstes Kugelgelenk bildet;
- eine zweite Kurbel (42), die konfiguriert ist, durch den zweiten Motor (12) rotatorisch angetrieben zu werden;
- eine zweite Stange (52) mit einem ersten und einem zweiten Ende, wobei das erste Ende der zweiten Stange (52) an der zweiten Kurbel (40) angelenkt ist, wobei das zweite Ende der zweiten Stange (52) die Form eines Teils einer Kugel besitzt und mit dem Betätigungselement (4) ein zweites Kugelgelenk bildet;
- eine dritte Kurbel (44), die konfiguriert ist, durch den dritten Motor (14) rotatorisch angetrieben zu werden;
- eine dritte Stange (54) mit einem ersten und einem zweiten Ende, wobei das erste Ende der dritten Stange (54) an der dritten Kurbel (40) angelenkt ist, wobei das zweite Ende der dritten Stange (54) die Form eines Teils einer Kugel besitzt und ein mit dem Betätigungselement (4) drittes Kugelgelenk bildet.

10. System nach Anspruch 7 oder 8, wobei der erste, der zweite und der dritte Sensor (92, 94, 96) durch einen ersten bzw. einen zweiten bzw. einen dritten Dehnungsmesstreifen gebildet sind, wobei die Motoranordnung einen ersten, einen zweiten und einen dritten Motor (10, 12, 14) und eine Verbindungsstufe (20) umfasst und wobei die Verbindungsstufe (20) Folgendes umfasst:
- eine erste Kurbel (40), die konfiguriert ist, durch den ersten Motor (10) rotatorisch angetrieben zu werden;
- eine erste Stange (50) mit einem ersten und einem zweiten Ende, wobei das erste Ende der ersten Stange (50) an der ersten Kurbel (40) angelenkt ist, wobei das zweite Ende der ersten Stange (50) die Form eines Teils einer Kugel besitzt und mit dem Betätigungselement (4) ein erstes Kugelgelenk bildet;
- eine zweite Kurbel (42), die konfiguriert ist, durch den zweiten Motor rotatorisch angetrieben zu werden;
- eine zweite Stange (52) mit einem ersten und einem zweiten Ende, wobei das erste Ende der zweiten Stange (52) an der zweiten Kurbel (40) angelenkt ist, wobei das zweite Ende der zweiten Stange (52) die Form eines Teils einer Kugel besitzt und mit dem Betätigungselement (4) ein zweites Kugelgelenk bildet;
- eine dritte Kurbel (44), die konfiguriert ist, durch den dritten Motor (14) rotatorisch angetrieben zu werden;
- eine dritte Stange (54) mit einem ersten und einem zweiten Ende, wobei das erste Ende der dritten Stange (54) an der dritten Kurbel (40) angelenkt ist, wobei das zweite Ende der dritten Stange (54) die Form eines Teils einer Kugel besitzt und mit dem Betätigungselement (4) ein drittes Kugelgelenk bildet;
und wobei der erste, der zweite und der dritte Dehnungsstreifen jeweils an die erste, die zweite und die dritte Stange (50, 52, 54) gekoppelt sind.

## Revendications

1. Système d'interface haptique comprenant :
- une enveloppe (2) qui peut être manipulée par un utilisateur ;
- un actionneur (4) couplé mécaniquement à l'enveloppe (2) et apte à fournir un stimulus haptique sur le bout d'un doigt de l'utilisateur ;
- un ensemble de moteurs (10, 12, 14, 20) configuré de manière à déplacer l'actionneur (4) avec trois degrés de liberté ;
**caractérisé en ce que** l'enveloppe (2) est configurée de manière à être déplacée sur une surface de référence (S_{ref}) par l'utilisateur, ledit système d'interface haptique comprenant en outre :
- une unité de mémoire (104) configurée de manière à stocker une surface tridimensionnelle virtuelle ;
- un système de localisation (80, 82, 102, 104) configuré de manière à déterminer la position et l'orientation de l'enveloppe (2) par rapport à la surface de référence (S_{ref}) ; et
- un étage de commande (70, 104) ; et
dans lequel l'étage de commande (70, 104) inclut :
- une unité de sélection (104) configurée de manière à sélectionner un point de la surface tridimensionnelle virtuelle, en fonction de la position de l'enveloppe (2) sur la surface de référence (S_{ref}), le point virtuel sélectionné présentant une hauteur respective, et la surface tridimensionnelle virtuelle présentant une inclinaison respective au niveau du point virtuel sélectionné ; et
- une unité d'actionnement (70, 104) configurée de manière à commander l'ensemble de moteurs (10, 12, 14, 20) de façon à :
- agencer l'actionneur (4) à une hauteur, par rapport à la surface de référence (S_{ref}), qui est fonction de la hauteur du point virtuel sélectionné ; et
- incliner l'actionneur (4) par rapport à la surface de référence (S_{ref}), en fonction de ladite inclinaison respective de la surface tridimensionnelle virtuelle ;
et dans lequel l'étage de commande (70, 104) est en outre configuré de manière à commander l'ensemble de moteurs (10, 12, 14, 20) de façon à déplacer l'actionneur (4) de manière invariante relativement à l'orientation de l'enveloppe (2).

2. Système selon la revendication 1, dans lequel l'enveloppe (2) est solidaire d'un système de référence XYZ comprenant un premier axe, un deuxième axe et un troisième axe (x, y, z), et dans lequel l'ensemble de moteurs (10, 12, 14, 20) est tel que l'actionneur (4) est configuré de manière à tourner autour d'axes respectivement parallèles au premier axe ou au deuxième axe (x, y) et à se déplacer parallèlement au troisième axe (z).

3. Système selon l'une quelconque des revendications précédentes, comprenant en outre des première et seconde unités magnétiques (80, 82) solidaires de l'enveloppe (2) et configurées de manière à générer respectivement un premier champ magnétique et un second champ magnétique, ledit système de localisation (80, 82, 102, 104) comprenant :
- une tablette graphique (100), qui forme ladite surface de référence (S_{ref}) et qui est configurée de manière à générer un signal préliminaire indiquant les positions des première et seconde unités magnétiques (80, 82) ; et
- un ordinateur (104) configuré de manière à déterminer la position et l'orientation de l'enveloppe (2), en fonction du signal préliminaire.

4. Système selon l'une quelconque des revendications précédentes, comprenant en outre un premier moteur vibrant (72) configuré de manière à occasionner une vibration de l'actionneur (4) par rapport à l'enveloppe (2) .

5. Système selon l'une quelconque des revendications précédentes, comprenant en outre un second moteur vibrant (74) configuré de manière à occasionner une vibration de l'enveloppe (2) par rapport à un plan de support, lorsque l'enveloppe (2) est agencée sur ledit plan de support.

6. Système selon l'une quelconque des revendications précédentes, comprenant en outre au moins un premier capteur (92) configuré de manière à générer un premier signal de force, indicatif d'une force exercée par l'utilisateur sur l'actionneur (4).

7. Système selon la revendication 6, comprenant en outre :
- un deuxième capteur et un troisième capteur (94, 96) configurés de manière à générer respectivement un deuxième signal de force et un troisième signal de force, le premier signal de force, le deuxième signal de force et le troisième signal de force étant indicatifs des composantes correspondantes dirigées le long de différentes directions, de ladite force exercée par l'utilisateur.

8. Système selon la revendication 7, comprenant en outre une unité de traitement (70) configurée de manière à déterminer la direction le long de laquelle l'utilisateur exerce ladite force sur l'actionneur (4), sur la base des premier, deuxième et troisième signaux de force.

9. Système selon l'une quelconque des revendications précédentes, dans lequel l'ensemble de moteurs comprend un premier moteur, un deuxième moteur et un troisième moteur (10, 12, 14) et un étage de connexion (20), et dans lequel l'étage de connexion (20) comprend :
- une première manivelle (40) configurée de manière à être entraînée en rotation par le premier moteur (10) ;
- une première tige (50) présentant une première extrémité et une seconde extrémité, la première extrémité de la première tige (50) étant articulée à la première manivelle (40), la seconde extrémité de la première tige (50) ayant la forme d'une portion de sphère et formant un premier joint à rotule avec l'actionneur (4) ;
- une deuxième manivelle (42) configurée de manière à être entraînée en rotation par le deuxième moteur (12) ;
- une deuxième tige (52) présentant une première extrémité et une seconde extrémité, la première extrémité de la deuxième tige (52) étant articulée à la deuxième manivelle (42), la seconde extrémité de la deuxième tige (52) ayant la forme d'une portion d'une sphère et formant un deuxième joint à rotule avec l'actionneur (4) ;
- une troisième manivelle (44) configurée de manière à être entraînée en rotation par le troisième moteur (14) ;
- une troisième tige (54) présentant une première extrémité et une seconde extrémité, la première extrémité de la troisième tige (54) étant articulée à la troisième manivelle (44), la seconde extrémité de la troisième tige (54) ayant la forme d'une portion d'une sphère et formant un troisième joint à rotule avec l'actionneur (4).

10. Système selon la revendication 7 ou 8, dans lequel le premier capteur, le deuxième capteur et le troisième capteur (92, 94, 96) sont respectivement formés par une première jauge de contrainte, une deuxième jauge de contrainte et une troisième jauge de contrainte, dans lequel l'ensemble de moteurs comprend un premier moteur, un deuxième moteur et un troisième moteur (10, 12, 14) et un étage de connexion (20), et dans lequel l'étage de connexion (20) comprend :
- une première manivelle (40) configurée de manière à être entraînée en rotation par le premier moteur (10) ;
- une première tige (50) présentant une première extrémité et une seconde extrémité, la première extrémité de la première tige (50) étant articulée à la première manivelle (40), la seconde extrémité de la première tige (50) ayant la forme d'une portion d'une sphère et formant un premier joint à rotule avec l'actionneur (4) ;
- une deuxième manivelle (42) configurée de manière à être entraînée en rotation par le deuxième moteur (12) ;
- une deuxième tige (52) présentant une première extrémité et une seconde extrémité, la première extrémité de la deuxième tige (52) étant articulée à la deuxième manivelle (42), la seconde extrémité de la deuxième tige (52) ayant la forme d'une portion d'une sphère et formant un deuxième joint à rotule avec l'actionneur (4) ;
- une troisième manivelle (44) configurée de manière à être entraînée en rotation par le troisième moteur (14) ;
- une troisième tige (54) présentant une première extrémité et une seconde extrémité, la première extrémité de la troisième tige (54) étant articulée à la troisième manivelle (44), la seconde extrémité de la troisième tige (54) ayant la forme d'une portion d'une sphère et formant un troisième joint à rotule avec l'actionneur (4) ; et
dans lequel lesdites première, deuxième et troisième jauges de contrainte sont couplées mécaniquement à la première tige, à la deuxième tige et à la troisième tige (50, 52, 54), respectivement.
